# EUROPEAN PATENT SPECIFICATION

(11) **EP 3 591 171 B1**
(45) Date of publication and mention of the grant of the patent: **07.04.2021**
(21) Application number: 19191558.6
(22) Date of filing: 27.01.2014
(51) Int. Cl.: F01D 11/12, F16J 15/44

(54) **ABRADABLE SEAL INCLUDING AN ABRADABILITY CHARACTERISTIC THAT VARIES BY LOCALITY**
ABREIBBARE DICHTUNG MIT JE NACH ORT VARIIERENDER ABREIBBARKEIT
JOINT ABRADABLE COMPRENANT UNE CARACTÉRISTIQUE D'ABRADABILITÉ VARIANT SELON LA LOCALISATION

(30) Priority: 19.02.2013 US 201361766403 P
(43) Date of publication of application: 08.01.2020
(62) Divisional of application: 14753931.6
(73) Proprietor: Raytheon Technologies Corporation, Farmington, CT 06032 (US)
(72) Inventor: DELISLE, Robert P, Colchester, CT 06415 (US); FAUGHNAN, JR., Paul R, East Hampton, CT 06424 (US); O'NEILL, Christopher F, Hebron, CT 06248 (US); BOYER, Jesse R, Manchester, CT 06040 (US)
(74) Representative: Dehns

(56) References cited:
- EP-A2- 2 317 079
- US-A- 4 867 639
- US-A1- 2008 260 523
- US-A1- 2008 274 336
- US-A1- 2010 151 183
- US-A1- 2011 164 961

## Description

### BACKGROUND

This disclosure relates to abradable seals that are used in gas turbine engines.

A gas turbine engine can include a compressor section and a turbine section that each has rotating airfoils. An abradable seal can be used at the tips of the airfoils to provide a tight clearance gap between the airfoil and an outer structure to thereby reduce flow leakage around the tips.

Abradable seals can be fabricated with a porous material that, when abraded by a mating structure, wears away to form a groove or wear pattern that provides the tight clearance gap. Airfoils are typically fabricated by investment casting. However, investment casting is not appropriate for forming an abradable seals on an airfoil. Thus, an abradable seal is fabricated in a separate process, which adds complexity and expense.

US 2011/164961 A1 discloses a gas turbine engine seal system having a rotating member with an abrasive tip surface coated with a metallic alloy matrix having ceramic abrasive particles embedded therein.

### SUMMARY

From a first aspect of the invention, an abradable seal for a gas turbine engine as claimed in claim 1 is provided.

In a further non-limiting embodiment of any of the foregoing examples, the seal body includes a plurality of cells defined between cell walls. The cell walls are made of a first material, and cell cores in the cells, the cell cores are made of a second material that is different from a first material in composition.

In a further non-limiting embodiment of any of the foregoing examples, the first material is metallic and the second material is ceramic.

In a further non-limiting embodiment of any of the foregoing examples, the first material is metallic and the second material is polymeric.

In a further non-limiting embodiment of any of the foregoing examples, the first material is metallic and the second material is a ceramic oxide.

In a further non-limiting embodiment of any of the foregoing examples, the first material is metallic and the second material is a ceramic nitride.

From a further aspect of the invention, a turbine engine as claimed in claim 4 is provided.

From a further aspect of the invention, a method of controlling abradability of an abradable seal for a gas turbine engine as claimed in claim 5 is provided.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example gas turbine engine.
Figure 2 illustrates an example rotatable blade, static structure and abradable seal between the blade and the static structure.
Figure 3 illustrates an example abradable seal having a gradient in its abradability characteristic between a seal side and a non-seal side and which does not fall within the scope of the invention.
Figure 4 illustrates an abradable seal having a cellular structure which does not fall within the scope of the invention.
Figure 5 illustrates an abradable seal having a cellular structure that differs in center-to-center spacing by locality and which does not fall within the scope of the invention.
Figure 6 illustrates an abradable seal having a cellular structure and cores that fill or partially fill the cellular structure and which does not fall within the scope of the invention.

### DETAILED DESCRIPTION

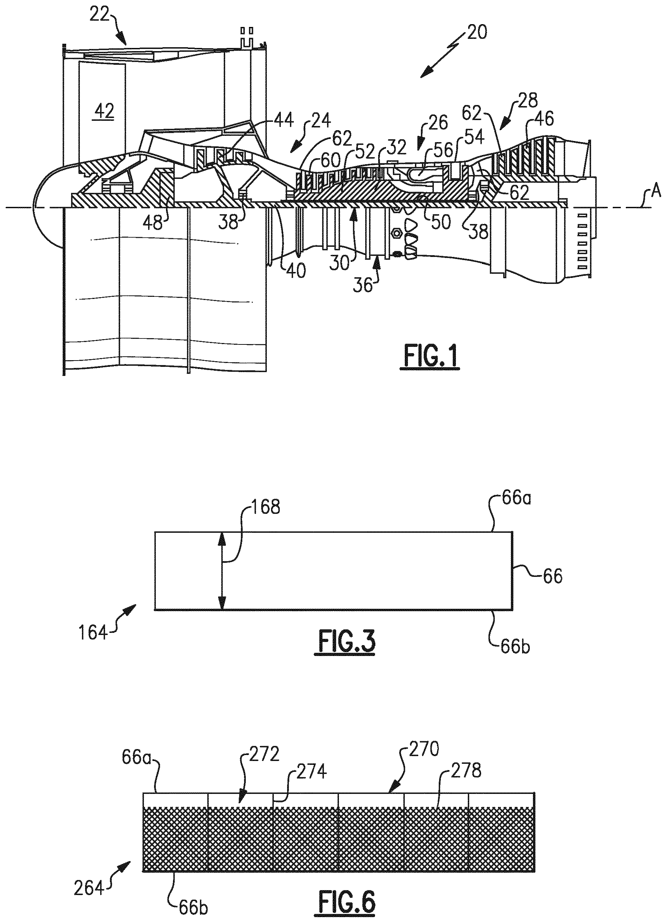

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path while the compressor section 24 drives air along a core flow path for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 20 generally includes a first spool 30 and a second spool 32 mounted for rotation about an engine central axis A relative to an engine static structure 36 via several bearing systems 38. It should be understood that various bearing systems 38 at various locations may alternatively or additionally be provided.

The first spool 30 generally includes a first shaft 40 that interconnects a fan 42, a first compressor 44 and a first turbine 46. The first shaft 40 is connected to the fan 42 through a gear assembly of a fan drive gear system 48 to drive the fan 42 at a lower speed than the first spool 30. The second spool 32 includes a second shaft 50 that interconnects a second compressor 52 and second turbine 54. The first spool 30 runs at a relatively lower pressure than the second spool 32. It is to be understood that "low pressure" and "high pressure" or variations thereof as used herein are relative terms indicating that the high pressure is greater than the low pressure. An annular combustor 56 is arranged between the second compressor 52 and the second turbine 54. The first shaft 40 and the second shaft 50 are concentric and rotate via bearing systems 38 about the engine central axis A which is collinear with their longitudinal axes.

The core airflow is compressed by the first compressor 44 then the second compressor 52, mixed and burned with fuel in the annular combustor 56, then expanded over the second turbine 54 and first turbine 46. The first turbine 46 and the second turbine 54 rotationally drive, respectively, the first spool 30 and the second spool 32 in response to the expansion.

The engine 20 is a high-bypass geared aircraft engine that has a bypass ratio that is greater than about six (6), with an example embodiment being greater than ten (10), the gear assembly of the fan drive gear system 48 is an epicyclic gear train, such as a planetary gear system or other gear system, with a gear reduction ratio of greater than about 2.3:1 and the first turbine 46 has a pressure ratio that is greater than about 5. The first turbine 46 pressure ratio is pressure measured prior to inlet of first turbine 46 as related to the pressure at the outlet of the first turbine 46 prior to an exhaust nozzle. The first turbine 46 has a maximum rotor diameter and the fan 42 has a fan diameter such that a ratio of the maximum rotor diameter divided by the fan diameter is less than 0.6. It should be understood, however, that the above parameters are only exemplary.

A significant amount of thrust is provided by the bypass flow B due to the high bypass ratio. The fan section 22 of the engine 20 is designed for a particular flight condition -- typically cruise at about 0.8 Mach and about 10,668m (35,000 feet). The flight condition of 0.8 Mach and 10,668m (35,000 feet), with the engine at its best fuel consumption. To make an accurate comparison of fuel consumption between engines, fuel consumption is reduced to a common denominator, which is applicable to all types and sizes of turbojets and turbofans. The term is thrust specific fuel consumption, or TSFC. This is an engine's fuel consumption in g/s (pounds per hour) divided by the net thrust. The result is the amount of fuel required to produce one pound of thrust. The TSFC unit is grams per second - kiloNewton (g/s.kN) (pounds per hour per pounds of thrust (lb/hr/lb Fn)). When it is obvious that the reference is to a turbojet or turbofan engine, TSFC is often simply called specific fuel consumption, or SFC. "Low fan pressure ratio" is the pressure ratio across the fan blade alone, without a Fan Exit Guide Vane system. The low fan pressure ratio as disclosed herein according to one non-limiting embodiment is less than about 1.45. "Low corrected fan tip speed" is the actual fan tip speed in feet per second divided by an industry standard temperature correction of [(Tram K) / (518.7 K)]^{0.5} ([(Tram °R) / (518.7 °R)]^{0.5}). The "Low corrected fan tip speed" as disclosed herein according to one non-limiting embodiment is less than about 350.5 m/s (1150 feet per second).

The compressor section 24 and a turbine section 28 of the engine 20 include rotatable blades 60, also known as airfoils. As can be appreciated, the specific design of the blades 60 in the compressor section 24 can differ from that of the blades 60 in the turbine section 28. A static structure 62 generally surrounds the blades 60. For example, the static structure 62 can be a blade outer air seal system or other type of structure that generally defines a radially outer flow path wall.

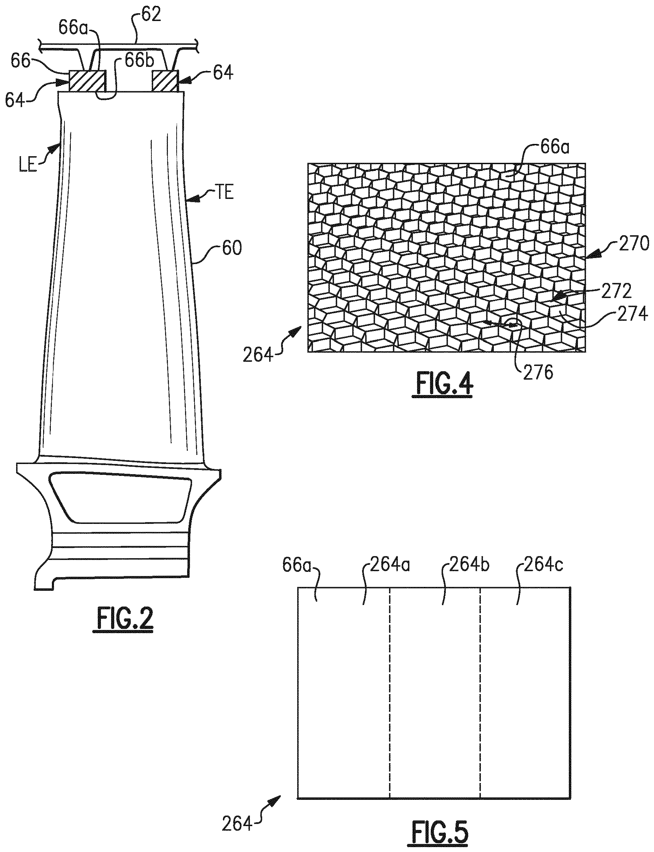

Referring to Figure 2, at least one abradable seal 64 is provided between the static structure 62 and the rotatable blade 60. In this example, two abradable seals 64 are shown, although it is to be understood that a single abradable seal 64 or additional abradable seals 64 can be used. In the example, the abradable seal 64 is mounted for rotation on the blade 60. Alternatively, the abradable seal 64 can be mounted on the static structure 62.

The abradable seal 64 includes a seal body 66 that defines a seal side 66a and a non-seal side 66b. The seal side 66a mates with at least a portion of the static structure 62 to limit flow leakage between the blade 60 and the static structure 62 and thus enhance engine efficiency. In this example, the non-seal side 66b is joined to the blade 60. As will be described in further detail below, the seal body 66 includes an abradability characteristic that varies by locality. The term "locality" as used herein refers to positions on or in the seal body 66.

The abradability characteristic is a physical characteristic of the seal body 66 that influences the abradability of the seal body 66. For example, different localities in or on the seal body 66 have different levels of abradability and thus the localities abrade at different rates. As examples, the abradability characteristic can vary across the seal surface 66a or through the seal body 66 between the non-seal surface 66b and the seal surface 66a. The following examples illustrate different abradability characteristics that may be employed individually or in any combination to achieve variation by locality.

Figure 3 illustrates an example abradable seal 164 which does not fall within the scope of the invention. In this disclosure, like reference numerals designate like elements where appropriate and reference numerals with the addition of one-hundred or multiples thereof designate modified elements that are understood to incorporate the same features and benefits of the corresponding elements. In this example, the abradable seal 164 includes a gradient 168 between the non-seal side 66b and the seal side 66a. In one example, the gradient 168 is a graded composition. In another example, the gradient 168 is a graded porosity.

In one example of the graded composition, the abradable seal 164 has a composition at or near the non-seal side 66b that is identical or similar to the composition of the material of the blade 60. This composition gradually changes as a function of distance from the non-seal side 66b toward the seal side 66a. For example, the composition changes to a composition that is more abradable than the composition at or near the non-seal side 66b. In some examples, the seal body 66 is made of a nickel-, titanium- or cobalt-based metallic alloy and the amount of the base metal present in the composition decreases as a function of distance from the non-seal side 66b toward the seal side 66a. For instance, the reduction in the amount of base metal changes by 10% or less between the non-seal side 66b and the seal side 66a. In another alternative, the composition can change from a first metal-based alloy to a second metal-based alloy that has a different base metal than the first metal-based alloy. As examples, the composition can change between any of nickel-, titanium- and cobalt-based alloys.

In another example, the composition of the abradable seal 164 includes hard, adbrasive particles that are held together with a relatively softer bond material. For example, the hard, adbrasive particles can be a nickel-, titanium- or cobalt-based alloys and the softer bond material can be a softer composition nickel-, titanium- or cobalt-based alloy. In another example, the hard, adbrasive particles are ceramic particles and the softer bond material is a nickel-, titanium- or cobalt-based alloy. Further, the relative amounts of the hard, adbrasive particles and the softer bond material can change according to the gradient 168 such that one of the seal side 66a or the non-seal side 66b has a relatively low amount of the hard, adbrasive particles and the other of the seal side 66a or the non-seal side 66b has a relatively high amount of the hard, adbrasive particles. According to the invention, such a gradient is alternatively used across the seal surface 66a rather than between the seal surface 66a and the non-seal surface.

In examples of a graded porosity, the percent porosity of the seal body 66 changes as a function of distance from the non-seal side 66b toward the seal side 66a. For example, the seal body 66 is fully or substantially fully dense, having 0-5% porosity at or near the non-seal side 66b and changes as a function of distance from the non-seal side 66b toward the seal side 66A to a porosity of 40-60%.

Figure 4 illustrates selected portions of another example abradable seal 264 which does not fall within the scope of the invention. In this example, at least the seal side 66a of the abradable seal 264 has a cellular structure 270 that includes a plurality of cells 272 that are defined between cell walls 274. The cell walls 274 can have a thickness of about 15 micrometers to 1 millimeter or even greater. In this example, the cells 272 are hexagonal, although it is to be understood that the cells can have other geometric formations, such as other rectilinear shapes or a circular shape. The cells 272 define a cell center-to-center spacing 276 that can vary by locality across the seal surface 66a. For example, Figure 5 shows a top-down view onto the seal side 66a of the abradable seal 264 which does not fall within the scope of the invention. In this example, the abradable seal 264 includes sections 264a, 264b, and 264c that differ with respect to the center-to-center spacing 276. Thus, each of the sections 264a, 264b and 264c differ in abradability characteristic. For example, the section 264b may have a center-to-center spacing 276 that is greater than the center-to-center spacing for either of the sections 264a and 264c, which can be equivalent. Thus, the section 264b has a lower volume of cell walls 274 compared to sections 264a and 264c and thus would have a higher abradability.

Referring to Figure 6 (which does not fall within the scope of the invention), in addition to or as an alternative to varying the center-to-center spacing 276, the cells 272 can be provided with cores 278 that fill or partially fill the cells 272. For example, the cell walls 274 are made of a first material and the cores 278 are made of a second material that differs from the first material in composition. In a further example, the cell walls 274 are made of one of the above-described metallic alloys and the second material of the cores 278 is a different metallic alloy, a ceramic material or a polymeric material to thus provide a different abradability characteristic than the cell walls 274. For example, the second material can be selected to be relatively harder than the first material of a cell wall 274. In this case, the cores 278 can be made from a harder metallic alloy or a ceramic material, such as a ceramic oxide or a ceramic nitride. The ceramic oxide can include, but is not limited, alumina and/or zirconium oxide. Similarly, the ceramic nitride can be, but is not limited to, boron nitride.

In the examples herein, the abradability characteristic differs by locality in or on the abradable seal 64/164/264. The variation in the abradability characteristic permits the abradable seal 64/164/264 to be tailored to a particular engine design. Portions of the abradable seal 64/164/264 that are to be in contact with a mating structure, such as the static structure 62, can be made more abradable while remaining portions of the abradable seal can be made less abradable to withstand the operating environment in the engine 20. Additionally or alternatively, the abradability characteristic can be tailored to produce desirable wear patterns in the abradable seal, to facilitate enhanced sealing with the blade 60.

The abradable seal 64/164/264 also embodies a method of controlling abradability by varying the abradability characteristic of the seal body by locality. The features disclosed herein may be difficult to form using conventional fabrication techniques. Thus, one example method of fabricating the abradable seal 64/164/264 having the features disclosed herein can include an additive manufacturing process. In such a process, powdered material is fed into a machine, which may provide a vacuum, for example. The machine deposits multiple layers of powdered material on to one another. The layers are selectively joined to one another with reference to computer design data, such as computer aided design data, to form structures that relate to a particular cross-section of the abradable seal that is to be produced. In one example, the powdered material is selectively melted using a direct metal laser sintering process or an energy beam melting process. Other layers or portions of layers corresponding to negative features, such as openings or porosity, are not joined and thus remain as a powdered material. The unjoined powder material is later removed using blown air, for example. Where the geometry is formed from compositionally different materials, the individual layers are fed from different compositions of materials. Thus, a first layer that is fed into the machine may have a first composition and a second or subsequent layer may have a different composition to produce the examples disclosed herein.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. An abradable seal (64) for a gas turbine engine (20), comprising:
a seal body (66) having a seal side (66a) and a non-seal side (66b),
the seal body (66) including an abradability characteristic that varies by locality,
wherein the abradability characteristic comprises a graded composition,
wherein a composition of the abradable seal (64) includes hard, abrasive particles that are held together with a relatively softer bond material,
wherein the hard, abrasive particles are ceramic particles or a nickel-, titanium- or cobalt-based alloy and the softer bond material is a softer composition nickel-, titanium- or cobalt-based alloy,
**characterised in that** the relative amounts of the hard, abrasive particles and the softer bond material change according to a gradient across a seal surface (66a) of the seal body (66).

2. The abradable seal (64) as recited in claim 1, wherein the seal body (66) includes a plurality of cells defined between cell walls, the cell walls being made of a first material, and cell cores in the cells, the cell cores being made of a second material that is different from a first material in composition.

3. The abradable seal (64) as recited in claim 2, wherein the first material is metallic and the second material is ceramic, or
the first material is metallic and the second material is polymeric, or
the first material is metallic and the second material is a ceramic oxide or ceramic nitride.

4. A turbine engine comprising:
optionally, a fan;
a compressor section;
a combustor in fluid communication with the compressor section; and
a turbine section in fluid communication with the combustor, the turbine section being coupled to drive the compressor section and the fan, and
at least one of the compressor section and the turbine section including an abradable seal (64) as claimed in claim 1, 2 or 3.

5. A method of controlling abradability of an abradable seal (64) for a gas turbine engine, the method comprising:
in a seal body (66) having a seal side and a non-seal side, varying by locality an abradability characteristic of the seal body (66), wherein the abradability characteristic comprises a graded composition,
wherein a composition of the abradable seal includes hard, abrasive particles that are held together with a relatively softer bond material,
wherein the hard, abrasive particles are ceramic particles or a nickel-, titanium- or cobalt-based alloy and the softer bond material is a softer composition nickel-, titanium- or cobalt-based alloy,
**characterised in that** the relative amounts of the hard, abrasive particles and the softer bond material change according to a gradient across a seal surface (66a) of the seal body (66).

## Patentansprüche

1. Abreibbare Dichtung (64) für ein Gasturbinentriebwerk (20), umfassend:
einen Dichtungskörper (66), der eine Dichtungsseite (66a) und eine Nichtdichtungsseite (66b) aufweist,
wobei der Dichtungskörper (66) eine Abreibbarkeitseigenschaft beinhaltet, die je nach Ort variiert,
wobei die Abreibbarkeitseigenschaft eine abgestufte Zusammensetzung umfasst,
wobei eine Zusammensetzung der abreibbaren Dichtung (64) harte, abrasive Partikel beinhaltet, die mit einem relativ weicheren Bindematerial zusammengehalten werden,
wobei die harten, abrasiven Partikel keramische Partikel oder eine nickel-, titan- oder cobaltbasierte Legierung sind und das weichere Bindematerial eine nickel-, titan- oder cobaltbasierte Legierung mit weicherer Zusammensetzung ist,
**dadurch gekennzeichnet, dass** sich die relativen Mengen der harten, abrasiven Partikel und des weicheren Bindematerials gemäß einem Gradienten über eine Dichtungsfläche (66a) des Dichtungskörpers (66) ändern.

2. Abreibbare Dichtung (64) nach Anspruch 1, wobei der Dichtungskörper (66) eine Vielzahl von Zellen, die zwischen Zellwänden definiert sind, wobei die Zellwände aus einem ersten Material hergestellt sind, und Zellkerne in den Zellen beinhaltet, wobei die Zellkerne aus einem zweiten Material hergestellt sind, das sich in der Zusammensetzung von einem ersten Material unterschiedet.

3. Abreibbare Dichtung (64) nach Anspruch 2, wobei das erste Material metallisch ist und das zweite Material keramisch ist, oder
das erste Material metallisch ist und das zweite Material polymer ist, oder
das erste Material metallisch ist und das zweite Material ein Keramikoxid oder Keramiknitrid ist.

4. Turbinentriebwerk, umfassend:
optional einen Fan;
einen Verdichterabschnitt;
eine Brennkammer in Fluidverbindung mit dem Verdichterabschnitt;
und
einen Turbinenabschnitt in Fluidverbindung mit der Brennkammer, wobei der Turbinenabschnitt so gekoppelt ist, dass er den Verdichterabschnitt und den Fan antreibt, und
mindestens eines aus dem Verdichterabschnitt und dem Turbinenabschnitt eine abreibbare Dichtung (64) nach Anspruch 1, 2 oder 3 beinhaltet.

5. Verfahren zum Steuern der Abreibbarkeit einer abreibbaren Dichtung (64) für ein Gasturbinentriebwerk, wobei das Verfahren Folgendes umfasst:
in einem Dichtungskörper (66), der eine Dichtungsseite und eine Nichtdichtungsseite aufweist, Variieren je nach Ort einer Abreibbarkeitseigenschaft des Dichtungskörpers (66), wobei die Abreibbarkeitseigenschaft eine abgestufte Zusammensetzung umfasst,
wobei eine Zusammensetzung der abreibbaren Dichtung harte, abrasive Partikel beinhaltet, die mit einem relativ weicheren Bindematerial zusammengehalten werden,
wobei die harten, abrasiven Partikel keramische Partikel oder eine nickel-, titan- oder cobaltbasierte Legierung sind und das weichere Bindematerial eine nickel-, titan- oder cobaltbasierte Legierung mit weicherer Zusammensetzung ist,
**dadurch gekennzeichnet, dass** sich die relativen Mengen der harten, abrasiven Partikel und des weicheren Bindematerials gemäß einem Gradienten über eine Dichtungsfläche (66a) des Dichtungskörpers (66) ändern.

## Revendications

1. Joint abradable (64) pour un moteur à turbine à gaz (20), comprenant :
un corps de joint (66) ayant un côté étanche (66a) et un côté non étanche (66b),
le corps de joint (66) comprenant une caractéristique d'abradabilité variant selon la localisation,
dans lequel la caractéristique d'abradabilité comprend une composition graduée,
dans lequel une composition du joint abradable (64) comprend des particules abrasives dures qui sont maintenues ensemble avec un matériau de liaison relativement plus souple,
dans lequel les particules abrasives dures sont des particules céramiques ou un alliage à base de nickel, de titane ou de cobalt et le matériau de liaison plus souple est un alliage à base de nickel, de titane ou de cobalt de composition plus souple,
**caractérisé en ce que** les quantités relatives des particules abrasives dures et du matériau de liaison plus souple changent selon un gradient à travers une surface étanche (66a) du corps de joint (66).

2. Joint abradable (64) selon la revendication 1, dans lequel le corps de joint (66) comprend une pluralité de cellules définies entre des parois de cellules, les parois de cellules étant constituées d'un premier matériau, et des noyaux de cellules dans les cellules, les noyaux de cellules étant constitués d'un second matériau qui est différent d'un premier matériau par sa composition.

3. Joint abradable (64) selon la revendication 2, dans lequel le premier matériau est métallique et le second matériau est en céramique, ou
le premier matériau est métallique et le second matériau est polymère, ou
le premier matériau est métallique et le second matériau est un oxyde de céramique ou un nitrure de céramique.

4. Moteur à turbine comprenant :
éventuellement, une soufflante ;
une section de compresseur ;
une chambre de combustion en communication fluidique avec la section de compresseur ; et
une section de turbine en communication fluidique avec la chambre de combustion, la section de turbine étant couplée pour entraîner la section de compresseur et la soufflante, et
au moins l'une de la section de compresseur et de la section de turbine comprenant un joint abradable (64) selon la revendication 1, 2 ou 3.

5. Procédé de contrôle de l'abradabilité d'un joint abradable (64) pour un moteur à turbine à gaz, le procédé comprenant :
dans un corps de joint (66) ayant un côté étanche et un côté non étanche, la variation selon la localisation d'une caractéristique d'abradabilité du corps de joint (66), dans lequel la caractéristique d'abradabilité comprend une composition graduée,
dans lequel une composition du joint abradable comprend des particules abrasives dures qui sont maintenues ensemble avec un matériau de liaison relativement plus souple,
dans lequel les particules abrasives dures sont des particules céramiques ou un alliage à base de nickel, de titane ou de cobalt et le matériau de liaison plus souple est un alliage à base de nickel, de titane ou de cobalt de composition plus souple,
**caractérisé en ce que** les quantités relatives des particules abrasives dures et du matériau de liaison plus souple changent selon un gradient à travers une surface étanche (66a) du corps de joint (66).
